**Europäisches Patentamt**

**European Patent Office**

**Office européen des brevets**

(19)

(11) Veröffentlichungsnummer: **0 175 831 B1**

(12) # EUROPÄISCHE PATENTSCHRIFT

(45) Veröffentlichungstag der Patentschrift:
31.01.90

(21) Anmeldenummer: 84810603.5

(22) Anmeldetag: 10.12.84

(51) Int. Cl.⁴: **G 01 D 5/14**, G 01 R 33/022, G 01 B 7/28

(54) Zahnmesstaster.

(30) Priorität: 15.12.83 CH 6686/83

(43) Veröffentlichungstag der Anmeldung:
02.04.86 Patentblatt 86/14

(45) Bekanntmachung des Hinweises auf die Patenterteilung:
31.01.90 Patentblatt 90/5

(84) Benannte Vertragsstaaten:
AT FR GB NL SE

(56) Entgegenhaltungen:
EP-A- 0 115 391
FR-A- 2 151 336
FR-A- 2 506 006
US-A- 2 987 669
US-A- 3 742 243

(73) Patentinhaber: Maag-Zahnräder und -Maschinen Aktiengesellschaft, Hardstrasse 219, CH-8023 Zürich (CH)

(72) Erfinder: Berchtold, Nikolaus, Schrärenmoosstrasse 7, CH-8052 Zürich (CH)

(74) Vertreter: Travnicek, Richard, MAAG-ZAHNRÄDER & -MASCHINEN AG Patentabteilung Hardstrasse 219, CH-8023 Zürich (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Zahnmesstaster mit einem Tasterbalken, der in einem Gehäuse schwenkbar gelagert ist und an einem Ende eine Tasterspitze und am anderen Ende einen von zwei relativ zueinander bewegbaren Teilen eines Messsystems trägt, das ein Magnetfeld erzeugt und zu der Tasterspitzenauslenkung proportionale elektrische Signale an eine Anpassschaltung abgibt, die die elektrischen Signale auf einen standardisierten Wert bringt, wobei die beiden relativ zueinander bewegbaren Teile des Messsystems aus einer Vorrichtung zur Erzeugung eines statischen Magnetfeldes bzw. aus einem Hallsensor bestehen und wobei die Anpassschaltung an dem Gehäuse befestigt ist.

Bei einem solchen Zahnmesstaster (Figur 5 der CH-A5-660 421 veröffentlicht am 15.4.87) die mit dem Ausgang des Hallsensors 50 verbundene Anpassschaltung 56 im wesentlichen eine Nullpunktkorrekturschaltung 74 und zwei in Reihe geschaltete Operationsverstärker 76 bzw. 78. Die Nullpunktkorrektur durch die Nullpunktkorrekturschaltung 74 ist bei dem Zahnmesstaster erforderlich, weil der Hallsensor 50 nur mit einem Gleichspannungswert betrieben wird, während bei den Messungen mit dem Zahnmesstaster an Zahnflanken aber immer eine Auslenkung des Tasterfingers von einer voreingestellten Nullpunktlage aus nach plus und minus gemessen werden muss. Da in Form der Gleichspannung nur eine einseitige Spannung vorliegt, die Messspannung am Ausgang aber möglichst aussagekräftig sein soll, d.h. Ausschlag nach links positive Spannung, Ausschlag nach rechts negative Spannung, muss die Ausgangsspannung des Hallsensors 50 symmetriert werden. Zu diesem Zweck liefert die Nullpunktkorrekturschaltung 74 eine Spannung, die vor dem Operationsverstärker 76 zu der Ausgangsspannung des Hallsensors 50 addiert wird. Die Nullpunktkorrekturschaltung 74 enthält einen Referenzspannungsgeber 80, der eine thermisch stabile Spannung unabhängig von eventuellen Schwankungen seiner Speisestromquelle liefert. Weiter enthält die Nullpunktkorrekturschaltung ein Potentiometer P2, an welchem die Nullpunktkorrekturspannung einstellbar ist, so dass keine mechanische Feinjustierung des Messsystems erforderlich ist.

Bei dem Zahnmesstaster können sich Unsicherheiten im Messergebnis einstellen, wenn die Nullpunktkorrekturschaltung 74 und der übrige Teil der Messschaltung nicht genau die gleiche Temperaturdrift haben. Es können sich Gleichtaktspannungen aus dem Hallsensor ergeben, die durch besondere zusätzliche Massnahmen unterdrückt werden müssen. Weiter hat es sich gezeigt, dass das Messergebnis noch verbessert werden könnte, wenn es möglich wäre, die Ausgangsspannung des Hallsensors, d.h. dessen Empfindlichkeit in Millivolt pro Mikrometer Tasterauslenkung zu vergrössern.

Aufgabe der Erfindung ist es, den Zahnmesstaster so zu verbessern, dass durch Temperaturdrifterscheinungen innerhalb der Messschaltung keine Messunsicherheit verursacht wird, dass sich Gleichtaktspannungen auf einfachere Weise unterdrücken lassen und dass eine höhere Hallsensorausgangsspannung erzielt wird.

Diese Aufgabe ist durch die Erfindung dadurch gelöst, dass der Hallsensor einen Differentialausgang hat und dass die Anpassschaltung als Differenzverstärkerschaltung ausgebildet ist.

Durch die erfindungsgemässe Verwendung eines Hallsensors mit Differentialausgang entfällt die in der Anpassschaltung des obengenannten Zahnmesstasters erforderliche Referenzspannungsquelle. Als weitere Vorteile ergeben sich: Die Ausgangsmessspannung des Hallsensors ist gegen null Volt schwebend. Die so erzeugte Messspannung kann somit differentiell gemessen werden.

Gleichtaktspannungen werden somit durch die Differenzverstärkerschaltung unterdrückt. Damit kann genauer gemessen werden, weil Unsicherheiten, herrührend von verschiedenen Temperaturkoeffizienten (Hallsensor/Referenzspannungsquelle), entfallen und weil der doppelte Absolutbetrag der Ausgangsmessspannung zur Verfügung steht.

In der Ausgestaltung der Erfindung nach den Ansprüchen 2 und 3 kann der Hallsensor auf einfache Weise dadurch hergestellt werden, dass zwei gleiche Hallsensorelemente der bei dem Zahnmesstaster nach CH-A5-660 421 verwendeten Art einfach mechanisch fest zu miteinander verbunden werden, dass ihre Hallgeneratoren bezüglich des Magnetfeldes entgegengesetzt zueinander angeordnet sind.

In der Ausgestaltung der Erfindung nach Anspruch 4 wird ein Doppelhallsensor hergestellt, in dem einfach zwei handelsübliche Hallsensoren mit gleichen Seiten aneinander befestigt werden.

Ein Ausführungsbeispiel der Erfindung wird im folgenden unter Bezugnahme auf die Zeichnung näher beschrieben. Es zeigt

Fig. 1 den prinzipiellen Schaltungsaufbau des Zahnmesstasters nach der Erfindung.

Fig. 2 eine Teilschnittansicht einer Ausführungsform des Zahnmesstasters nach der Erfindung und

Fig. 3 ein elektrisches Schaltbild der Ausführungsform nach Fig. 2.

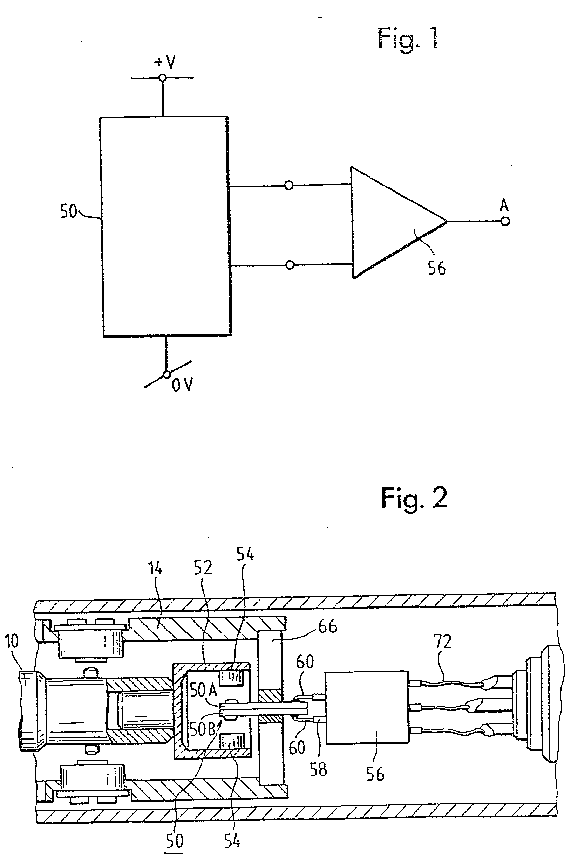

Fig. 1 zeigt einen Hallsensor 50 mit Differentialausgang, dessen Ausgangssignal durch eine Anpassschaltung in Form einer Differenzverstärkerschaltung 56 verarbeitet wird. Im einfachsten Fall kann der in Fig. 1 dargestellte Hallsensor 50 zwei Hallgeneratoren enthalten, die bezüglich der Richtung des Magnetfeldes entgegengesetzt gerichtet im Raum angeordnet sind. Die entgegengesetzte Ausrichtung der Hallgeneratoren im Raum führt zur Erzeugung des gewünschten Differentialausgangssignals. Im Vergleich zu einem Hallsensor mit nur einem Hallgenerator erzeugt der Hallsensor mit zwei Hallgeneratoren und Differentialausgang das doppelt so grosse Ausgangssignal, und es ergibt sich ein besseres Störsignal/Nutzsignal-Verhältnis. Die in Fig. 1 dargestellte Differenzverstärkerschaltung 56 kann irgendeinen bekannten Aufbau haben. Im folgenden wird eine spezielle Ausführungsform beschrieben, die sich insbesondere in Verbindung mit der in Fig. 2 dargestellten Ausführungsform des Zahnmesstasters eignet, bei der der Hallsensor aus zwei gesonderten, räumlich entgegengesetzt ausgerichteten und mit gleichen Seiten fest miteinander verbundenen Hallsensorelementen 50A, 50B besteht.

Fig. 2 zeigt eine Teillängsschnittansicht eines Zahnmesstasters, wobei der Schnitt in der horizontalen Schwenkebene eines Tasterbalkens 10 geführt ist. Die schwenkbare Lagerung des Tasterbalkens 10 ist in der CH-A5-660 421 ausführlich beschrieben, auf das zur Vermeidung von Wiederholungen verwiesen wird. Das Messsystem des Messtasters besteht aus einem insgesamt mit der Bezugszahl 50 bezeichneten Hallsensor, aus zwei diametral auf entgegengesetzten Seiten des Hallsensors und mit Abstand von diesem in einem Magnethalter 52 angeordneten Dauermagneten 54 und einer Anpassschaltung 56 in Form eines Elektronikteils mit Anschlussbuchsen 58, in die entsprechende Anschlussstifte 60 des Hallsensors 50 eingesteckt sind. Die Dauermagnete 54 sind wie im Falle der CH-A5-660 421 robuste Samarium-Kobalt-Magnete, die eine sehr grosse Feldstärke erzeugen und eine besonders gute Langzeitstabilität haben. Der Magnethalter 52 ist mit dem in Fig. 2 rechten Ende des Tasterbalkens fest verbunden. Die Dauermagnete 54 sind so an dem Magnethalter 52 angebracht, dass die gleichnamigen Pole der Dauermagnete einander zugewandt sind.

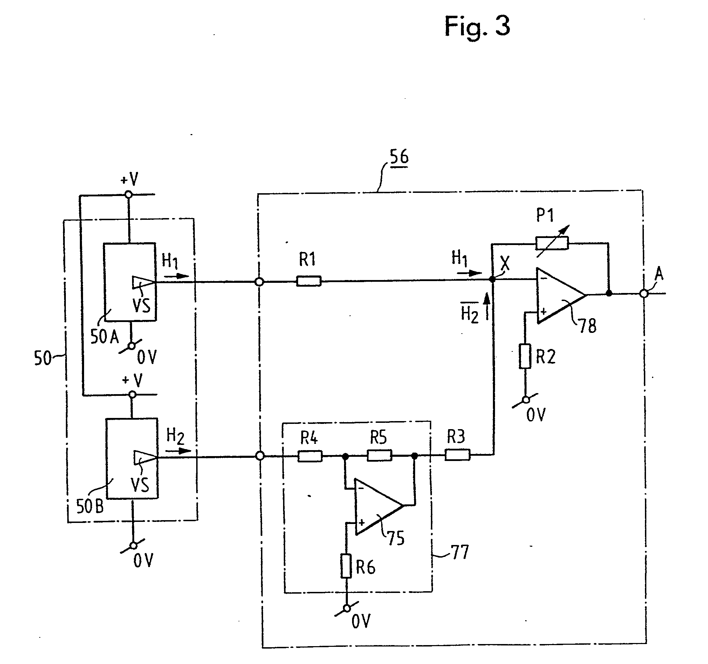

Der in Fig. 2 dargestellte Hallsensor 50 besteht aus den beiden Hallsensorelementen 50A und 50B, bei denen es sich jeweils um eine auf einem Keramikplättchen integrierte Schaltung handelt, die den eigentlichen Hallgenerator sowie einen Spannungsregler und einen Verstärker VS (vgl. Fig. 3) enthält. Die auf den Keramikplättchen angeordneten elektrischen Schaltungen sind über die Anschlussstifte 60 und die Anschlussbuchsen 58 mit der Differenzverstärkerschaltung 56 verbunden, die unter Bezugnahme auf Fig. 3 weiter unten beschrieben ist. Die beiden Keramikplättchen sind so zusammengeklebt, dass die Hallgeneratoren der Hallsensorelemente 50A und 50B um 180° zueinander gedreht sind, d.h. bezüglich des durch die Dauermagnete 54 erzeugten Magnetfeldes räumlich entgegengesetzt angeordnet sind. Der Hallsensor 50 ist an einem Halter 66 befestigt, der seinerseits an einem Gehäuse 14 des Zahnmesstasters befestigt ist. Der Halter 66 besteht z.B. aus Leichtmetall. Dadurch ist der Hallsensor 50 in dem Zahnmesstaster unbeweglich befestigt, während der Magnethalter sich bezüglich des Hallsensors 50 bewegt, wenn der Tasterbalken 10 verschwenkt wird. Die Differenzverstärkerschaltung 56 ist durch die in die Anschlussbuchsen 58 eingesteckten Anschlussstifte 60 ebenfalls unbeweglich befestigt. Bei Bedarf kann eine zusätzliche Befestigung des die Differenzverstärkerschaltung 56 enthaltenden Elektronikteils an dem Halter 66 vorgesehen werden. Über Anschlussdrähte 72 ist der Ausgang der Differenzverstärkerschaltung 56 mit den Anschlussbuchsen des Zahnmesstasters verbunden.

Der Schaltungsaufbau des Hallsensors 50 und der Differenzverstärkerschaltung 56 ist in Fig. 3 gezeigt. Der Hallsensor 50 besteht aus den beiden Hallsensorelementen 50A und 50B, die in Parallelschaltung an einer Speisespannungsquelle liegen. Da jedes Hallsensorelement ein handelsübliches Bauelement ist, wird dessen Aufbau nicht im einzelnen beschrieben. In Fig. 3 ist lediglich der bereits in jedes Hallsensorelement integrierte Verstärker VS angedeutet. Die Differenzverstärkerschaltung 56 empfängt das Differentialausgangssignal $H_1$, $H_2$ der Hallsensorelemente 50A, 50B und gibt an ihrem Ausgang A ein dem Differentialausgangssignal des Hallsensors 50 entsprechendes Signal gegen null Volt ab. In dem hier dargestellten Ausführungsbeispiel enthält die Differenzverstärkerschaltung 56 eine Invertierschaltung 77 und einen Operationsverstärker 78. Der Ausgang des Hallsensorelements 50A ist über einen Widerstand R1 mit dem invertierenden Eingang des Operationsverstärkers 78 verbunden. Der Ausgang des Operationsverstärkers 78 ist über ein Potentiometer P1 zur Verstärkungseinstellung zu dem invertierenden Eingang an einem Schaltungspunkt X rückgekoppelt. Der nichtinvertierende Eingang des Operationsverstärkers 78 liegt über einen Widerstand R2 and der 0 Volt-Seite der Speisespannungsquelle.

Der Ausgang des Hallsensorelements 50B ist mit dem Eingang der Invertierschaltung 77 verbunden, deren Ausgang über einen Widerstand R3 mit dem Schaltungspunkt X und somit mit dem invertierenden Eingang des Operationsverstärkers 78 verbunden ist. Die Invertierschaltung 77 enthält einen Invertierverstärker 75.

Der Ausgang des Hallsensorelements 50B ist über einen Widerstand R4 mit dem invertierenden Eingang des Invertierverstärkers 75 verbunden, dessen Ausgang über einen Widerstand R5 zu dem invertierenden Eingang rückgekoppelt ist, und der nichtinvertierende Eingang des Invertierverstärkers 75 liegt über einen Widerstand R6 an der 0 Volt-Seite der Speisespannungsquelle. Das besondere Merkmal der Invertierschaltung 77 ist, dass die Verstärkung 1 beträgt.

Im Betrieb wird das Ausgangssignal $H_1$ des Hallsensorelements 50A über den Widerstand R1 direkt an den invertierenden Eingang des Operationsverstärkers 78 angelegt, während an diesen invertierenden Eingang das Ausgangssignal des Hallsensorelements 50B über die Invertierschaltung 77 und den Widerstand R3, d.h. in der invertierten Form $H_2$ angelegt wird. Der Operationsverstärker 78 empfängt also an seinem invertierenden Eingang die Summe der Beträge der beiden Ausgangssignale der Hallsensorelemente 50A, 50B, die er nach gewünschter Verstärkung als Ausgangssignal über den Ausgang A abgibt.

Die in der dargestellten Differenzverstärkerschaltung 56 enthaltenen beiden Verstärker 75, 78 können als eine integrierte Schaltung ausgebildet sein. Die nach der CH-A5-660 421 vorgesehene elektrische Nullpunkteinstellung erfolgt im hier beschriebenen Fall zugunsten eines einfacheren Aufbaus der Schaltung 56 auf mechanischem Wege durch entsprechende Justierung des Hallsensors 50 zwischen den Dauermagneten 54.

In der Schaltung nach Fig. 3 sind in einem Ausführungsbeispiel folgende Bauelemente verwendet worden (die Widerstandswerte sind in Kiloohm angegeben und es handelt sich jeweils um Filmwiderstände von 1/8 Watt):

| Bezugszeichen | Bauelement | Wert | Typ |
|---|---|---|---|
| 75, 78 | Invertier-/ Operationsverstärker | | IC 1458 |
| P1 | Drahtpotentiometer | 10 | |
| R1 | Widerstand | 10 | |
| R2 | Widerstand | 5,1 | |
| R3 | Widerstand | 10 | |
| R4 | Widerstand | 10 | |
| R5 | Widerstand | 10 | |
| R6 | Widerstand | 5,1 | |
| 50A, 50B | Hallsensor | | 92 SS 12.2 (Honeywell) |

## Patentansprüche

1. Zahnmesstaster mit einem Tasterbalken (10), der in einem Gehäuse schwenkbar gelagert ist und an einem Ende eine Tasterspitze und am anderen Ende einen von zwei relativ zueinander bewegbaren Teilen eines Messsystems trägt, das ein Magnetfeld erzeugt und zu der Tasterspitzenauslenkung proportionale elektrische Signale an eine Anpassschaltung abgibt, die die elektrischen Signale auf einen standardisierten Wert bringt, wobei die beiden relativ zueinander bewegbaren Teile des Messsystems aus einer Vorrichtung zur Erzeugung eines statischen Magnetfeldes (54) bzw. aus einem Hallsensor (50) bestehen und wobei die Anpassschaltung (56) an dem Gehäuse befestigt ist, dadurch gekennzeichnet, dass der Hallsensor (50) einen Differentialausgang ($H_1$, $H_2$) hat und dass die Anpassschaltung (56) als Differenzverstärkerschaltung ausgebildet ist.

2. Zahnmesstaster nach Anspruch 1, dadurch gekennzeichnet, dass der Hallsensor (50) zwei bezüglich des Magnetfeldes im Raum entgegengesetzt ausgerichtete Hallgeneratoren (50A, 50B) aufweist.

3. Zahnmesstaster nach Anspruch 2, dadurch gekennzeichnet, dass die Hallgeneratoren (50A, 50B) zwei gesonderte, mechanisch fest miteinander verbundene Elemente sind.

4. Zahnmesstaster nach Anspruch 1 oder 2, dadurch gekennzeichnet, dass die beiden Hallgeneratoren (50A, 50B) Teile von zwei Hallsensoren sind, die mit gleichen Seiten aneinander befestigt sind.

## Claims

1. Tooth sensor comprising a sensor bar (10) which is pivotally supported in a housing and carries at one end a sensor probe and at the other end one of two parts, which can be moved relatively to each other, of a measuring system which generates a magnetic field and outputs electric signals, which are proportional to the sensor probe deflection, to a matching circuit which brings the electric signals to a standardized value, the two parts, which can be moved relatively to each other, of the measuring system consisting of a device for generating a static magnetic field (54) or of a Hall sensor (50) and the matching circuit (56) being attached to the housing, characterized in that the Hall sensor (50) has a differential output ($H_1$, $H_2$) and in that the matching circuit (56) is constructed as a differential amplifier circuit.

2. Tooth sensor according to Claim 1, characterized in that the Hall sensor (50) exhibits two Hall generators (50A, 50B) which are aligned oppositely in space with respect to the magnetic field.

3. Tooth sensor according to Claim 2, characterized in that the Hall generators (50A, 50B) are two separate elements which are mechanically permanently joined to each other.

4. Tooth sensor according to Claim 1 or 2, characterized in that the two Hall generators (50A, 50B) are parts of two Hall sensors which are attached to each other with the same sides.

## Revendications

1. Palpeur mesureur de dents comportant une tige de palpage (10) montée de manière oscillante dans un boîtier et portant à une extrémité une pointe de palpage et, à l'autre extrémité, l'une de deux parties mobiles l'une par rapport à l'autre d'un système de mesure qui génère un champ magnétique et émet des signaux électriques proportionnels à la déviation de la pointe de palpage vers un circuit d'adaptation qui ramène ces signaux électriques à une valeur normalisée, les deux parties relativement mobiles du système de mesure étant constituées par un dispositif de génération d'un champ magnétique statique (54), plus particulièrement un capteur à effet Hall (50), le circuit d'adaptation (56) étant fixé sur le boîtier, caractérisé par le fait que le capteur à effet Hall (50) possède une sortie différentielle (H1, H2) et que le circuit d'adaptation (56) est costitué par un amplificateur différentiel.

2. Palpeur mesureur de dents selon la revendication 1, caractérisé par le fait que le capteur à effet Hall (50) présente deux générateurs Hall (50A, 50B) orientés spatialement en opposition au champ magnétique.

3. Palpeur mesureur de dents selon la revendication 2, caractérisé par le fait que les générateurs de Hall (50A, 50B) sont deux éléments séparés solidement reliés mécaniquement l'un à l'autre.

4. Palpeur mesureur de dents selon la revendication 1 ou 2, caractérisé par le fait que les deux générateurs de Hall (50A, 50B) sont des parties de deux capteurs à effet Hall qui sont accolés sur la même face.

Fig. 1

Fig. 2

## Fig. 3